# EUROPÄISCHE PATENTSCHRIFT

(11) **EP 0 703 110 B1**
(45) Veröffentlichungstag und Bekanntmachung des Hinweises auf die Patenterteilung: **19.11.1997**
(21) Anmeldenummer: 95112443.7
(22) Anmeldetag: 08.08.1995
(51) Int. Cl.: B60K 31/00

(54) **Verfahren und Vorrichtung zur Geschwindigkeitsbegrenzung eines Kraftfahrzeuges**
Method and means for limiting the speed of a motor vehicle
Procédé et dispositif pour limiter la vitesse d'un véhicule automobile

(30) Priorität: 23.09.1994 DE 4434022
(43) Veröffentlichungstag der Anmeldung: 27.03.1996
(73) Patentinhaber: DAIMLER-BENZ AKTIENGESELLSCHAFT, 70567 Stuttgart (DE)
(72) Erfinder: Linden, Thomas, Dipl.-Ing., D-70327 Stuttgart (DE); Saur, Jörg, Dipl.-Ing., D-73054 Eislingen (DE); Gaus, Hermann, Dipl.-Ing., D-70619 Stuttgart (DE)

(56) Entgegenhaltungen:
- DE-A- 2 836 342
- DE-A- 2 925 566
- DE-A- 3 329 783
- DE-A- 3 618 844
- DE-A- 3 928 045
- DE-A- 4 115 903
- US-A- 4 474 155

## Beschreibung

Die Erfindung bezieht sich auf ein Verfahren und eine Vorrichtung zur Begrenzung der Geschwindigkeit eines Kraftfahrzeuges auf eine vorgegebene Grenzgeschwindigkeit, die einen Bereich erlaubter Geschwindigkeiten von einem Bereich zu vermeidender Geschwindigkeiten trennt.

Es ist bereits bekannt, die Geschwindigkeit eines Kraftfahrzeuges mittels einer sogenannten Tempomatregelung auf einem einmal erreichten Wert zu halten, indem der Fahrer bei Erreichen des gewünschten Wertes einen Tempomatbedienhebel losläßt und damit die Tempomatregelung unter Festlegung des momentanen Geschwindigkeitswertes als Sollwert aktiviert. Eine solche Tempomatregelung dient vor allem dem Zweck, den Fahrer bei langen Autofahrten zu entlasten, wenn er über eine längere Zeit mit einer konstanten Geschwindigkeit fahren möchte, z.B. auf Autobahnabschnitten.

Eine andere Fahrsituation liegt vor, wenn auf einem Streckenabschnitt eine bestimmte Höchst- oder Mindestgeschwindigkeit vorgeschrieben ist. Ein praktisch sehr wichtiges Beispiel bilden die geschwindigkeitsbeschränkten Zonen in Wohngebieten, z.B. in Form einer zulässigen Höchstgeschwindigkeit von 30km/h. Hier soll der Fahrer in der Lage sein, im Falle einer Höchstgeschwindigkeitsbegrenzung auch mit einer niedrigeren bzw. im Falle einer Mindestgeschwindigkeitsbegrenzung mit einer höheren Geschwindigkeit fahren zu können, wobei lediglich das Über- bzw. Unterschreiten der vorgegebenen Grenzgeschwindigkeit verhindert werden soll. Eine Tempomatregelung ist hierfür nicht sinnvoll, da der aktivierte Tempomat stets die Grenzgeschwindigkeit einzuregeln versucht und sich außerdem bei einer Bremsbetätigung selbsttätig abschaltet, wonach sie wieder neu durch Anfahren der Grenzgeschwindigkeit aktiviert werden muß. Es besteht folglich Bedarf an Systemen, mit denen sich die Fahrzeuggeschwindigkeit auf eine vorgegebene Grenzgeschwindigkeit nach oben oder unten beschränken läßt und die gleichzeitig das Fahren mit beliebigen Geschwindigkeiten auf einer Seite dieser Grenzgeschwindigkeit zulassen.

In der Offenlegungsschrift DE 33 29 783 A1 ist angegeben, durch fahrzeugseitige Maßnahmen das Fahren über einer vorgeschriebenen Höchstgeschwindigkeit selbsttätig zu unterbinden, indem bei Überschreitung derselben mikroprozessorgesteuert eine Motorleistungsbegrenzung, z.B. durch Kraftstoffdrosselung, vorgenommen wird. In ganz ähnlicher Weise ist bei einer Einrichtung zur Fahrgeschwindigkeitsbegrenzung von Kraftfahrzeugen nach der Offenlegungsschrift DE 29 25 566 A1 vorgesehen, eine bleibende Höchstgeschwindigkeitsüberschreitung dadurch zu verhindern, daß bei einer Überschreitung eine eventuell verstärkte Betätigung des Gaspedals durch den Fahrer unwirksam gemacht wird. In beiden Fällen läßt sich die Grenzgeschwindigkeit verstellen, und zwar von außerhalb oder durch den Fahrer.

In der Offenlegungsschrift DE 28 36 342 A1 ist für ein Fahrzeug mit einem über ein Fahrpedal in seiner Leistung steuerbaren Antriebsmotor eine mechanische Lösung zur Verhinderung der Überschreitung einer zulässigen Höchstgeschwindigkeit angegeben, indem ein Stellmotor auf ein die Antriebsmotorleistung beeinflussendes Steuerglied, insbesondere eine Drosselklappe, derart einwirkt, daß die Motorleistung unabhängig von der Fahrpedalstellung verringert wird, sobald die Fahrgeschwindigkeit die Höchstgeschwindigkeit überschreitet. Der Stellmotor wird hierbei von einem Regler angesteuert, welcher die Istgeschwindigkeit mit der Höchstgeschwindigkeit vergleicht und den Stellmotor in einem von der Differenz dieser Geschwindigkeiten abhängigen Maße beeinflußt, wenn die Fahrgeschwindigkeit in die Nähe der Höchstgeschwindigkeit ansteigt.

Auch ein in der Offenlegungsschrift DE 41 15 903 A1 beschriebener Fahrzeuggeschwindigkeitsregler läßt sich zur selbsttätigen Verhinderung der Überschreitung einer vorgegebenen Höchstgeschwindigkeit verwenden. Dabei greift die Regelungsmaßnahme jeweils ein, wenn die Fahrzeuggeschwindigkeit die Höchstgeschwindigkeit überschreitet, und beinhaltet z.B. eine periodische Unterbrechung der Kraftstoffversorgung, eine Bremsenbetätigung und/oder eine Verkleinerung der Drosselventilöffnung. Wie bei den zuvor erwähnten höchstgeschwindigkeitsbegrenzenden Systemen ist folglich auch hier ein Systemeingriff erst dann vorgesehen, wenn die Fahrzeuggeschwindigkeit die vorgegebene Höchstgeschwindigkeit erreicht oder überschritten hat.

Aus der Offenlegungsschrift DE 36 18 844 A1 ist ein Verfahren zur Begrenzung der Drehzahl einer Brennkraftmaschine bekannt, das auf ein Verfahren zur Begrenzung der Fahrgeschwindigkeit auf eine vorgegebene Höchstgeschwindigkeit bei eingelegter höchster Gangstufe umgeschaltet werden kann. Bei diesem Verfahren erfolgt bei Annäherung an die jeweils maximal zulässige Motordrehzahl ein zweistufiger drehzahlregelnder Systemeingriff. Dabei wird von einem Sollwertgeber ein Sollwert für die zeitliche Änderung der Motordrehzahl in Abhängigkeit von der Istdrehzahl gemäß einer Sollwertkennlinie vorgegeben, die oberhalb einer ersten Drehzahlschwelle vom maximalen Wert linear abfällt und bei der maximalen Drehzahl den Wert Null erreicht. Eine Minimalauswahlschaltung sorgt dafür, daß bei kleinen Motordrehzahlen unterhalb dieser ersten Drehzahlschwelle die maximale Drehzahländerungsgeschwindigkeit zugelassen wird. In dem geregelten Drehzahlbereich wird bei Überschreiten einer zweiten Drehzahlschwelle von einem ersten Reglerparametersatz zur schnellen Ausregelung von Regelabweichungen unter Inkaufnahme von Überschwingen auf einen zweiten Reglerparametersatz zum langsamen Ausregeln unter Vermeidung jeglichen Überschwingens umgeschaltet. Für den Umschaltvorgang zwischen den beiden Regelungsarten ist eine Hysterese vorgesehen, indem die Umschaltung auf den Reglerparametersatz zur schnellen Ausregelung erst bei Unterschreiten einer gegenüber der zweiten niedrigeren dritten Drehzahlschwelle erfolgt.

Der Erfindung liegt als technisches Problem die Bereitstellung eines Verfahrens und einer Vorrichtung zur Begrenzung der Geschwindigkeit eines Kraftfahrzeuges auf eine vorgegebene Grenzgeschwindigkeit zugrunde, mit denen eine vergleichsweise genaue Einhaltung der Begrenzung bei hohem Fahrkomfort gewährleistet ist.

Dieses Problem wird durch ein Verfahren mit den Merkmalen des Anspruchs 1 sowie durch eine Vorrichtung mit den Merkmalen des Anspruchs 9 gelöst. Verfahrensgemäß erfolgt bereits innerhalb eines Intervalls erlaubter Geschwindigkeiten, d.h. unterhalb einer zulässigen Höchst- oder oberhalb einer zulässigen Mindestgeschwindigkeit ein steuernder Systemeingriff zur Geschwindigkeitsbeeinflussung. Der steuernde Eingriff erfolgt nach einer vorgegebenen Steuerungskennlinie in Abhängigkeit von der Istgeschwindigkeit. Durch geeignete Vorgabe dieser Steuerungskennlinie läßt sich die Istgeschwindigkeit weich und ohne abrupte Geschwindigkeitsänderungen an die vorgegebene Grenzgeschwindigkeit heranführen. Liegt die Istgeschwindigkeit nahe genug an der vorgegebenen Grenzgeschwindigkeit, so wird anstelle des steuernden ein regelnder Systemeingriff vorgenommen, der dafür sorgt, daß die Istgeschwindigkeit im Bereich der Grenzgeschwindigkeit verbleibt, auch wenn die fahrerangeforderte Geschwindigkeit im Bereich der zu vermeidenden Geschwindigkeiten liegt. Als weitere wesentliche Eigenschaft des Verfahrens erfolgt kein steuernder oder regelnder Systemeingriff, wenn die fahrerangeforderte Geschwindigkeit im Bereich erlaubter Geschwindigkeiten liegt. Dies gewährleistet, daß das Kraftfahrzeug in dem Bereich erlaubter Geschwindigkeiten mit jeder gewünschten Geschwindigkeit gefahren werden kann. Dabei führt eine von der Grenzgeschwindigkeit in Richtung des Bereichs erlaubter Geschwindigkeiten abweichende Fahreranforderung für die Geschwindigkeit nicht zu einer gänzlichen Deaktivierung des Begrenzungsverfahrens. Im Gegensatz zu einer Tempomatregelung bleibt beispielsweise bei einer vorgegebenen zulässigen Höchstgeschwindigkeit das Begrenzungsverfahren auch dann weiterhin in Bereitschaft, wenn der Fahrer das Fahrzeug von einer über oder auf der Höchstgeschwindigkeit liegenden Istgeschwindigkeit auf eine merklich darunter liegende Geschwindigkeit herunterbremst. Bei einem anschließenden Beschleunigungsversuch über die Höchstgeschwindigkeit verhindert dann das Begrenzungsverfahren eine Höchstgeschwindigkeitsüberschreitung zunächst durch den steuernden und dann ggf. durch den regelnden Systemeingriff. Selbstverständlich können geeignete Systemeingriffe in verbleibenden Geschwindigkeitsbereichen vorgesehen sein, z.B. steuernde Eingriffe zur Rückführung der Istgeschwindigkeit in den Bereich der Grenzgeschwindigkeit, wenn erstere zunächst weit von letzterer entfernt im Bereich zu vermeidender Geschwindigkeiten liegt.

Anspruch 9 charakterisiert eine vorteilhafte Vorrichtung, mit der sich die Fahrzeuggeschwindigkeit auf eine vorgegebene Höchstgeschwindigkeit nach diesem Verfahren begrenzen läßt. Der Systemeingriff beinhaltet dabei eine Beeinflussung des maximalen Drosselklappenöffnungswinkels, wobei für den steuernden Systemeingriff eine Kennlinie für den bei einer jeweiligen Istgeschwindigkeit maximal erlaubten Öffnungswinkel vorgegeben wird, während für regelnde Systemeingriffe ein Geschwindigkeitsregler vorgesehen ist, der ein Signal für den maximalen Drosselklappenöffnungswinkel in Abhängigkeit von der Differenz zwischen Ist- und Grenzgeschwindigkeit erzeugt. Über einen Umschalter wird entweder dieses Reglerausgangssignal oder das auf der Kennlinie basierende Steuerungssignal ausgewählt und einer Minimalauswahleinheit zugeleitet, in welcher das ausgewählte Signal mit dem zur fahrerangeforderten Geschwindigkeit gehörigen Drosselklappenstellungssignal verglichen wird. Diese Minimalauswahl gewährleistet folglich, daß die Fahrpedalanforderung realisiert wird, wenn sie eine unter der von der Begrenzungseinrichtung vorgegebenen Höchstgeschwindigkeit liegende Geschwindigkeit repräsentiert.

Wird das Begrenzungsverfahren aktiviert, solange die Istgeschwindigkeit im Bereich erlaubter Geschwindigkeiten liegt, so erfolgt gemäß einer Weiterbildung der Erfindung nach Anspruch 2 zunächst der geschwindigkeitssteuernde Eingriff, der spätestens dann auf einen geschwindigkeitsregelnden Eingriff umgeschaltet wird, wenn die Istgeschwindigkeit die vorgegebene Grenzgeschwindigkeit erreicht hat. Dabei wird für den geschwindigkeitsregelnden Eingriff die Sollgeschwindigkeit spätestens im anschließenden Regelbetrieb auf die Grenzgeschwindigkeit geführt, wobei sie insbesondere bereits anfänglich auf diesen Wert gesetzt sein kann.

Zur Dämpfung von Überschwingeffekten ist eine Weiterbildung der Erfindung nach Anspruch 3 von Vorteil, indem von einem geschwindigkeitssteuernden Eingriff ggf. schon vor Erreichen der Grenzgeschwindigkeit auf einen regelnden Eingriff umgeschaltet wird. Erreicht die Istgeschwindigkeit einen definiert vor der Grenzgeschwindigkeit liegenden Wert am Ende eines Steuerungseingriffs, so wird unter Konstanthalten der momentanen Steuerungsparameter zunächst eine vorbestimmte Zeitdauer abgewartet, um festzustellen, ob das Fahrzeug aufgrund der Beschleunigungsträgheit innerhalb dieses Zeitraums die Grenzgeschwindigkeit erreicht (unter Beschleunigung wird im folgenden auch eine negative, d.h. eine Verzögerung, verstanden). Sobald dies der Fall ist, wird auf den regelnden Systemeingriff umgeschaltet und die Sollgeschwindigkeit auf die Grenzgeschwindigkeit gesetzt. Wird hingegen bis zum Ablauf der vorbestimmten Zeitdauer die Grenzgeschwindigkeit nicht erreicht, so wird dann auf den regelnden Systemeingriff umgeschaltet, jedoch wird nun die Sollgeschwindigkeit anfänglich auf den vor der Grenzgeschwindigkeit liegend gewählten Geschwindigkeitswert gesetzt und während der anfänglichen Regelphase in stetigem Verlauf rampenförmig in Richtung Grenzgeschwindigkeit verändert. Sobald dadurch die Istgeschwindigkeit den Wert der Grenzgeschwindigkeit erreicht hat, wird die Sollgeschwindigkeit konstant auf selbigen gesetzt. Mit dieser Maßnahme lassen sich Regelschwingungen, insbesondere ein übermäßiges Überschwingen der Istgeschwindigkeit in den Bereich zu vermeidender Geschwindigkeiten, weitgehend unterbinden.

In weiterer Ausgestaltung der Erfindung nach Anspruch 4 beinhaltet ein steuernder oder regelnder Systemeingriff einen Motormoment-, Getriebeschaltungs- und/oder Bremseneingriff, der jeweils von der Istgeschwindigkeit abhängig ist. Vorteilhaft ist eine abgestimmte Kombination dieser verschiedenen Eingriffe.

Eine Weiterbildung der Erfindung nach Anspruch 5 eignet sich zur Einhaltung einer vorgeschriebenen Höchstgeschwindigkeit, unterhalb der das Verfahren dem Fahrer bezüglich der Geschwindigkeitswahl freie Hand läßt, ohne dadurch völlig deaktiviert zu werden. Sobald eine fahrerangeforderte Geschwindigkeit größer als die Höchstgeschwindigkeit erkannt wird, während sich die Istgeschwindigkeit noch unterhalb derselben im Bereich geschwindigkeitssteuernder Eingriffe befindet, steuert das Verfahren die Fahrzeuggeschwindigkeitseinstellung mittels einer istgeschwindigkeitsabhängigen Begrenzung des maximalen Motormomentes anhand einer entsprechend abgelegten Kennlinie für den maximalen Drosselklappenöffnungswinkel. In weiterführender Ausgestaltung erstreckt sich das Geschwindigkeitsintervall für steuernde Systemeingriffe gemäß Anspruch 6 herunter bis zum Fahrzeugstillstand. Dies ist insbesondere zur Einhaltung geringer zulässiger Höchstgeschwindigkeiten, z.B. in 30km/h-Zonen, zweckmäßig. Die Fahrzeuggeschwindigkeit wird in diesem Fall bei einem hohen Beschleunigungsversuch bereits vom Anfahren an steuernd beeinflußt, wozu insbesondere auch ein Steuerungseingriff in die Getriebeschaltung eines Automatgetriebes gehört, durch welchen das Anfahren im zweiten Gang erfolgt, wenn die Fahrpedalauslenkung, d.h. die fahrerangeforderte Fahrzeuggeschwindigkeit, nicht über einem vorgegebenen Wert liegt. Das Vorgeben dieser Schwelle erlaubt es dem Fahrer, durch stärkeres Niederdrücken des Fahrpedals in einem Ausnahmefall schneller anzufahren.

In weiterer Ausgestaltung einer solchen Höchstgeschwindigkeitsbegrenzung ist es gemäß Anspruch 7 vorteilhaft, den zur Geschwindigkeitssteuerung vorgegebenen maximalen Drosselklappenöffnungswinkel unterschiedlich einzustellen, je nachdem, ob die bei der Verfahrensaktivierung vorliegende Istgeschwindigkeit unterhalb ober oberhalb eines vorgegebenen, im Geschwindigkeitsintervall für steuernde Systemeingriffe liegenden Schwellenwertes liegt. Liegt die Istgeschwindigkeit über diesem Schwellenwert und somit näher an der vorgegebenen Höchstgeschwindigkeit, so wird für einen gegebenen Istgeschwindigkeitswert in der Kennlinie ein höherer maximaler Öffnungswinkel zugelassen als für den Fall einer anfangs unterhalb des Schwellenwertes liegenden Istgeschwindigkeit. Mit dieser Maßnahme wird ein zu langsames Heranführen der Istgeschwindigkeit an die Grenzgeschwindigkeit und damit in den Bereich geschwindigkeitsregelnder Eingriffe vermieden, zu dem das System ansonsten aufgrund der oben genannten Begrenzungsmaßnahmen neigen könnte.

In Weiterbildung nach Anspruch 8 ist das Verfahren vom Benutzer ein- und ausschaltbar, wobei geeignete Übergangsmaßnahmen beim Ein- und Ausschalten vorgesehen sind, welche die Fahrzeuggeschwindigkeit vom zuvor vorliegenden Wert auf die für den anschließenden Fahrbetrieb maßgebende Sollgeschwindigkeit ohne übermäßige, plötzliche Beschleunigungseffekte auch in denjenigen Fällen führen, in denen die neue Sollgeschwindigkeit zunächst merklich von der Grenzgeschwindigkeit abweicht.

In einer vorteilhaften Weiterbildung der Erfindung nach Anspruch 10 ist die Geschwindigkeitsbegrenzungsvorrichtung zusätzlich mit einer Tempomatfunktion ausgerüstet, die wahlweise anstelle der Begrenzungsfunktion aktivierbar ist. So kann mit dieser Vorrichtung wahlweise mit der Tempomatfunktion eine einmal erreichte Geschwindigkeit konstant gehalten werden oder mit der Begrenzungsfunktion das Über- oder Unterschreiten einer vorgegebenen Grenzgeschwindigkeit verhindert werden.

Eine bevorzugte Ausführungsform der Erfindung ist in den Zeichnungen dargestellt und wird nachfolgend beschrieben. Hierbei zeigen:
- Fig. 1: ein Blockdiagramm eines Funktionsteils zur Motormomentbegrenzung innerhalb einer Vorrichtung zur Begrenzung der Fahrzeuggeschwindigkeit auf eine Höchstgeschwindigkeit von 30km/h,
- Fig. 2: eine Kennlinie des maximalen Drosselklappenöffnungswinkels in Abhängigkeit von der Istgeschwindigkeit, wie sie für geschwindigkeitssteuernde Eingriffe der Vorrichtung von Figur 1 verwendet wird und
- Fig. 3: Kurvendiagramme über den Zeitverlauf verschiedener Größen während einer durch die Geschwindigkeitsbegrenzungsvorrichtung beeinflußten Anfahrphase.

Die nachfolgend beschriebene Vorrichtung und das von ihr durchgeführte Verfahren beinhalten die Fähigkeit, die Geschwindigkeit eines Kraftfahrzeuges selbsttätig auf eine vorgegebene, zulässige Höchstgeschwindigkeit von v_{G}=30km/h zu begrenzen, wobei alternativ auch eine andere Grenzgeschwindigkeit vorgesehen und das System Mittel zur Einstellung anderer Grenzgeschwindigkeiten in Stufen oder stufenlos aufweisen kann. Die Begrenzung beinhaltet einen Motormomenteneingriff, eine Getriebebeeinflussung und ggf. Bremseneingriffe. Zusätzlich enthält die Vorrichtung eine Tempomatregelung üblicher Art. Die beschriebene Begrenzungseinrichtung eignet sich beispielsweise für Fahrzeuge mit einem Nachfolge-Automatgetriebe (NAG) und einer Motorsteuerungselektronik mit elektronischer Fahrpedalfunktion.

Die Begrenzungsfunktion läßt sich über eine nicht gezeigte Schalteinrichtung vom Fahrzeugführer ein- und ausschalten. Gleiches gilt für die zusätzlich vorgesehene Tempomatfunktion. Die Arbeitsbereiche der beiden Funktionen sind so eingestellt, daß sie sich nicht überlappen, wozu die 30km/h-Begrenzung nach entsprechender Schalterbetätigung nur aktiviert wird, wenn die Fahrzeug-Istgeschwindigkeit unterhalb der Mindestsollgeschwindigkeit der Tempomatregelung von z.B. 36 km/h liegt. Nach unten ist die Aktivierung der Begrenzungseinrichtung nicht beschränkt, so daß selbige aus dem Fahrzeugstillstand heraus möglich ist. Aufgrund der getrennten Arbeitsbereiche kann der Tempomatschalter auch als Schalter für die Begrenzungseinrichtung dienen. Das Ausschalten der Begrenzungsfunktion erfolgt außer über den zugehörigen, fahrerbedienbaren Schalter auch selbsttätig bei Einlegen der Fahrstufen 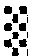 P 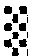 , 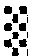 N 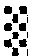 oder 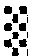 R 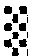 oder Automatgetriebes. Zudem erfolgt eine Abschaltung der 30km/h-Begrenzung bei Betätigung eines Kick-down-Schalters, um dem Fahrer die Möglichkeit zu belassen, bei zuvor aktivierter Begrenzungsfunktion schnell aus einem Gefahrenbereich herausfahren zu können. Alternativ kann eine solche Abschaltung auch mit dem Überschreiten eines Schwellenwertes der Fahrpedalauslenkung und/oder des Gradienten der Fahrpedalbetätigungsgeschwindigkeit verbunden sein.

Da dem Fahrer bei eingeschalteter Begrenzungsfunktion weniger Motormoment als gewohnt zur Verfügung steht, ist vorgesehen, ihn über diesen Zustand durch eine optische Anzeige zu informieren, die im Blickfeld des Fahrers liegt, z.B. als Lichtschacht oder zusätzliche Funktionslampe in einem Tachometer-Kombiinstrument oder mittels einer Doppelnutzung eines vorhandenen Displays, wie einer Außentemperaturanzeige, indem bei abgeschalteter Begrenzung die Außentemperatur und bei eingeschalteter Begrenzung diese Information, z.B. mittels eines Schriftzugs 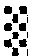 30km/h 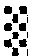 , angezeigt wird. Zusätzlich ist eine Fehler- oder Gefahrenwarnung vorgesehen, wenn ein systembedingter Fehler auftritt oder an einer Gefällstrecke trotz eingeschalteter Begrenzungsfunktion die zulässige Höchstgeschwindigkeit überschritten wird. Neben einer optischen Anzeige, z.B. einer Blinkanzeige, kann diese Warnung durch eine haptische Information, z.B. ein Rütteleffekt am Gaspedal, oder eine akustische Warnung in Form eines Summers oder Gongs erfolgen.

Die 30km/h-Begrenzungsfunktion teilt sich in zwei Betriebsarten auf, und zwar einen Betrieb mit geschwindigkeitssteuernden Eingriffen und einen solchen mit geschwindigkeitsregelnden Eingriffen. Der Steuerungsbetrieb ist in einem Geschwindigkeitsbereich von null bis unterhalb der Höchstgeschwindigkeit sowie zur Bereitstellung einer Übergangsfunktion nach dem Abschalten der Begrenzung aktiv. Der regelnde Begrenzungsbetrieb ist aktiv, wenn die Istgeschwindigkeit nahe der Höchstgeschwindigkeit oder darüber im Bereich zwischen Höchstgeschwindigkeit und Tempomat-Mindestsollgeschwindigkeit liegt. Wird die Begrenzung bei Istgeschwindigkeiten über der Tempomat-Mindestgeschwindigkeit eingeschaltet, kann zunächst eine Geschwindigkeitsreduzierung durch einen steuernden Eingriff, z.B. Bremseneingriff, Gangrückschaltung und/oder Tempomatschalterbedienung in Richtung Verzögern, erfolgen.

Die Begrenzungsfunktion wird nachfolgend zunächst für den Fall erläutert, daß sie eingeschaltet wird, wenn die Fahrzeug-Istgeschwindigkeit merklich unter der vorgegebenen Grenzgeschwindigkeit von 30km/h liegt, beispielsweise wenn das Fahrzeug steht. Damit die Istgeschwindigkeit beim starken Beschleunigen aus dem Stand oder bei kleinen Anfangsgeschwindigkeiten nicht über die Grenzgeschwindigkeit gelangt, wird durch die aktive Begrenzungsfunktion das Anfahrmoment reduziert. Andererseits muß die Momentenbegrenzung noch ein zügiges Anfahren an Steigungen erlauben. Dies wird durch folgende Vorgehensweise des Begrenzungsverfahrens erreicht.

Zum einen erfolgt eine Getriebebeinflussung dahingehend, daß der zweite Gang zum Anfahren gewählt wird, falls aus motorischen Gründen der erste Gang nicht obligatorisch ist und falls die Fahrervorgabe beim Fahrpedal nicht einen gesetzten Schwellenwert der Pedalauslenkung überschreitet. Wird der Auslenkungsschwellenwert überschritten, erfolgt das Anfahren im ersten Gang. Zudem werden die Getriebehochschaltungen beeinflußt, indem z.B. die Schaltung vom ersten in den zweiten Gang vor Erreichen der Regelungsphase bei einer vorgebbaren Schaltgeschwindigkeit erfolgt und ab Überschreitung einer weiteren Geschwindigkeitsschwelle das Schalten in den dritten Gang ausgesetzt wird, um ein mögliches Überschwingen der Istgeschwindigkeit über die Grenzgeschwindigkeit aufgrund des Schaltvorgangs zu vermeiden.

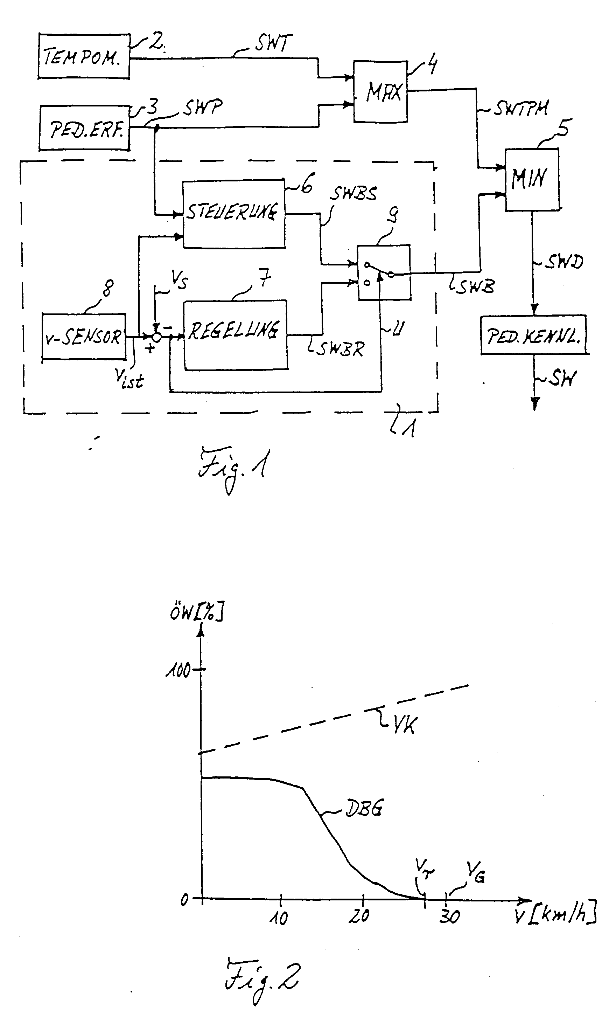

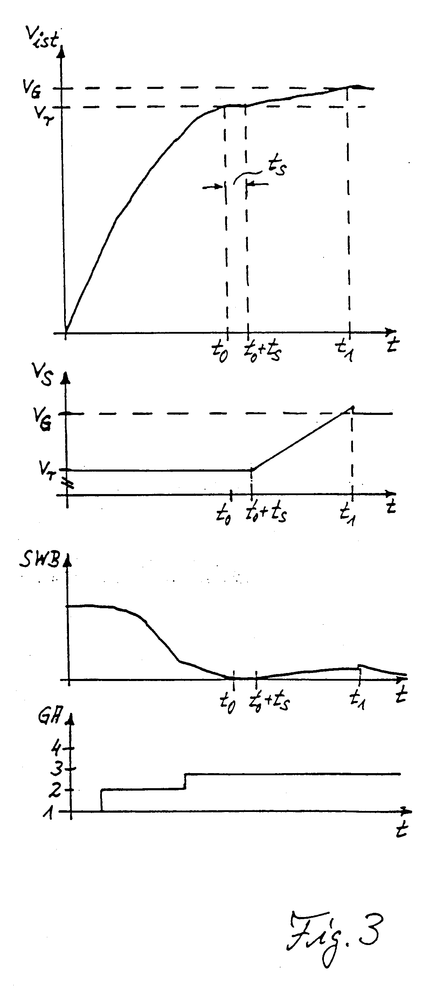

Des weiteren erfolgt parallel zur Getriebebeeinflussung ein Motormomenteneingriff durch Beeinflussung des maximalen Drosselklappenöffnungswinkels gemäß folgender vier Maßnahmen. Erstens wird der maximale Drosselklappenöffnungswinkel in Abhängigkeit von der Fahrzeug-Istgeschwindigkeit nach einer vorgegebenen Kennlinie (DBG) begrenzt. Ein typischer Verlauf dieser Begrenzungskurve (DBG) ist in Figur 2 zusammen mit der Vollastkennlinie (VK) dargestellt, wobei der Öffnungswinkel (ÖW) auf der Ordinate abgetragen ist. Als zweite Maßnahme erfolgt die Sollwertausgabe dieser Motormomentenbegrenzung beim Aufregeln über ein geeignet angepaßtes PT₁-Glied verzögert, wobei dessen Parameter für die einzelnen Gänge unterschiedlich wählbar sind. Um ein Überschwingen der Istgeschwindigkeit (vᵢₛₜ) über die Grenzgeschwindigkeit von 30km/h zu vermeiden, wird als dritte Maßnahme ein Geschwindigkeitswert (vᵣ) geringfügig unterhalb der Grenzgeschwindigkeit (v_{G}=30km/h) vorgegeben, wie Fig. 3 entnehmbar ist. Unterhalb dieses gewählten Geschwindigkeitswertes (vᵣ) erfolgt der geschwindigkeitssteuernde Eingriff gemäß der vorgegebenen Kennlinie (DBG). Letztere erreicht bei dem vorgegebenen Geschwindigkeitswert (vᵣ) den Wert null, was dem erwähnten Überschwingen der Geschwindigkeit während der gesteuerten Heranführung der Ist- an die Grenzgeschwindigkeit vorbeugt. Sobald die Istgeschwindigkeit (vᵢₛₜ) diesen gesetzten Wert (vᵣ) unterhalb der Grenzgeschwindigkeit (v_{G}) erreicht hat, wartet das System eine vorgegebene Zeitspanne (t_{S}) ab, ob die Istgeschwindigkeit (vᵢₛₜ) währenddessen die Grenzgeschwindigkeit (v_{G}) erreicht.

Sobald dies erkannt wird, erfolgt eine Umschaltung vom steuernden auf den geschwindigkeitsregelnden Begrenzungsbetrieb, wobei als zugehöriger Sollwert (v_{S}) der Grenzgeschwindigkeitswert (v_{G}) festgesetzt wird. Als Geschwindigkeitsregler für den regelnden Begrenzungsbetrieb wird ein PI-Regler benutzt. Spätestens nach Ablauf der vorbestimmten Zeitspanne (t_{S}) wird auch dann auf den geschwindigkeitsregelnden Begrenzungsbetrieb umgeschaltet, wenn die Istgeschwindigkeit (vᵢₛₜ) bis dahin die Grenzgeschwindigkeit (v_{G}) noch nicht erreicht hat, wobei in diesem Fall der Sollwert (v_{S}) anfänglich auf die unterhalb der Grenzgeschwindigkeit (v_{G}) festgesetzte Geschwindigkeit (vᵣ) gesetzt wird, die das obere Ende des Geschwindigkeitsintervalls für den steuernden Begrenzungsbetrieb markiert. Von dort wird die Sollgeschwindigkeit (v_{S}) rampenförmig in Richtung Grenzgeschwindigkeit (v_{G}) angehoben. Während der rampenförmigen Sollwerterhöhung wird vom PI-Regler mittels Nullsetzen des I-Anteils nur der P-Anteil wirksam. Sobald durch diese Maßnahmen die Istgeschwindigkeit (vᵢₛₜ) die Grenzgeschwindigkeit (v_{G}) erreicht hat, wird die Sollgeschwindigkeit (v_{S}) auf den Grenzgeschwindigkeitswert (v_{G}) gesetzt und der volle PI-Anteil des Reglers aktiviert. Selbstverständlich kann die Umschaltung auf den geschwindigkeitsregelnden Betrieb alternativ schon bei Erreichen eines wählbaren Geschwindigkeitswertes dicht unterhalb der Grenzgeschwindigkeit (v_{G}) durch die Fahrzeug-Istgeschwindigkeit erfolgen. Ebenso ist es zweckmäßig, bei aktiver Begrenzung vom Regelbetrieb auf den Steuerungsbetrieb erst umzuschalten, wenn die Istgeschwindigkeit (vᵢₛₜ) um einen vorgegebenen Wert unter die Grenzgeschwindigkeit (v_{G}) abgesunken ist, um unerwünschte Umschaltvorgänge zwischen Steuerung und Regelung aufgrund normaler Geschwindigkeitsregelschwingungen um die Grenzgeschwindigkeit (v_{G}) zu verhindern. Stellt sich heraus, daß durch die obigen Maßnahmen nicht die gewünschte Geschwindigkeitszunahme erreicht wird, besteht eine vierte Maßnahme darin, den von der Steuerungskennlinie (DBG) vorgegebenen Sollwert für den maximalen Drosselklappenöffnungswinkel um einen vorgegebenen Faktor zu erhöhen.

Um diese Vorgaben für den maximalen Drosselklappenöffnungswinkel zu bewerkstelligen, enthält die Begrenzungsvorrichtung den in Figur 1 gezeigten Motormomenteneingriffsteil mit folgendem Aufbau. Eine Einheit (3) zur Erfassung der Fahrpedalstellung erzeugt ein die Fahreranforderung für das Motormoment wiedergebendes Drosselklappenstellungssignal (SWP), das parallel zum Ausgangssignal (SWT) des oben erwähnten Tempomaten (2) der Eingangsseite einer Maximalauswahlstufe (4) zugeführt ist, die von diesen das Signal für die größere Motormomentanforderung als Ausgangssignal (SWTPM) an einen Eingang einer nachfolgenden Minimalauswahlstufe (5) durchläßt. Das Signal (SWP) der fahrpedalstellungserfassenden Einheit (3) wird außerdem einer Begrenzungsfunktionsbaugruppe (1) zugeführt, welche die eigentliche 30km/h-Begrenzungsfunktion durchführt und hierzu eine Begrenzungssteuereinheit (6), einen Geschwindigkeitsregler (7), einen Istgeschwindigkeitssensor (8) sowie einen Umschalter (9) beinhaltet. Dabei ist das Signal (SWP) von der fahrpedalstellungserfassenden Einheit (3) an die Eingangsseite der Begrenzungssteuereinheit (6) geführt, die hieraus das fahrerangeforderte Motormoment erkennt und abhängig davon sowie von der vorliegenden Istgeschwindigkeit ein Ausgangssteuersignal (SWBS) für die Drosselklappenstellung abgibt, das einem ersten Anschluß des Umschalters (9) zugeführt ist. Eine Subtraktionsstufe an der Eingangsseite des Reglers (7) subtrahiert den Geschwindigkeitssollwert (v_{S}) von der über den Geschwindigkeitssensor (8) erfaßten Fahrzeug-Istgeschwindigkeit (vᵢₛₜ) und führt die so gebildete Regelabweichung dem Regler (7) zu. Außerdem dient dieses Regelabweichungssignal als Steuersignal (U) für den Umschalter (9). Die Reglereinheit (7) erzeugt ein Ausgangssignal (SWBR) für die Drosselklappeneinstellung, das einem zweiten Auswahlanschluß des Umschalters (9) zugeführt ist. Weitere Komponenten, z.B. zur rampenförmigen Änderung der Sollgeschwindigkeit (v_{S}) und zur Getriebebeeinflussung, sind der Übersichtlichkeit halber nicht explizit dargestellt. Mit dem Umschalter (9) wird entweder das Ausgangssignal (SWBS) der Steuerungseinheit (6) oder das Ausgangssignal (SWBR) des Reglers (7) als Ausgangssignal (SWB) der Begrenzungsfunktionsbaugruppe (1) durchgelassen, das einem weiteren Eingang der Minimalauswahlstufe (5) zugeführt ist. Letztere läßt das Signal mit der geringeren Motormomentanforderung, d.h. dem geringeren maximalen Drosselklappenöffnungswinkel, zu einer Pedalkennlinieneinheit (10) durch, welche über eine Fahrpedalprogressionskennlinie das für die Drosselklappeneinstellung wirksame Stellsignal (SW) erzeugt, wie dies für den Tempomatsollwert geläufig ist.

Die Begrenzungsvorrichtung beinhaltet des weiteren ein nicht gezeigtes Druckpunktstellglied, welches durch eine Feder mit Freilauf einen übertretbaren Druckpunkt für das Fahrpedal erzeugt. Der Fahrer kann den Fuß auf dem Druckpunkt ablegen, und durch die Schwergängigkeit des Fahrpedals wird ihm bewußt, daß die 30km/h-Begrenzung aktiv ist. Dies vermeidet, daß der Fahrer bei aktiver Begrenzung das Gaspedal aufgrund des ansonsten fehlenden Zusammenhangs zwischen Motormoment und Fahrpedalstellung sehr weit durchtritt.

Dieser Aufbau der Begrenzungsfunktionsgruppe leistet die von ihr gewünschten Eigenschaften. Ist beispielsweise wie oben beschrieben die Begrenzungsfunktion aktiviert und liegt die Istgeschwindigkeit (vᵢₛₜ) merklich unterhalb der Grenzgeschwindigkeit (v_{G}), d.h. im Bereich geschwindigkeitssteuernder Eingriffe, so ist zunächst der Tempomat (2) inaktiv und die Maximalauswahlstufe (4) läßt die Fahreranforderung (SWP) an die Minimalauswahlstufe (5) durch. Gleichzeitig wird am Umschalter (9) aufgrund der merklich unter der Grenzgeschwindigkeit (v_{G}) liegenden Istgeschwindigkeit (vᵢₛₜ) das Signal der Begrenzungssteuereinheit (6) als Ausgangssignal durchgelassen, während der Geschwindigkeitsregler (7) inaktiv bleibt. Die Minimalauswahlstufe (5) sorgt nun dafür, daß bei einer über der vorgegebenen Kennlinie (DBG) für den maximalen Drosselklappenöffnungswinkel liegenden fahrerangeforderten Motorleistung das von dieser Kennlinie (DBG) bestimmte Ausgangssignal (SWBS) der Begrenzungssteuereinheit (6) als wirksames Drosselklappenstellsignal durchgelassen wird, was den geschwindigkeitssteuernden Eingriff realisiert. Ist hingegen das fahrerangeforderte Motormoment geringer als durch diese Kennlinie (DBG) maximal erlaubt, so wird diese Fahreranforderung von der Minimalauswahlstufe (5) zur Drosselklappeneinstellung durchgelassen. Dies gewährleistet, daß der Fahrer das Fahrzeug unbeeinflußt von der Begrenzungsvorrichtung bei jeder beliebigen Geschwindigkeit unterhalb der Grenzgeschwindigkeit von 30km/h fahren kann, wobei die Begrenzungsfunktion im Hintergrund in Bereitschaft bleibt und aktiv einsetzt, wenn das fahrerangeforderte Motormoment höher als das durch die Kennlinie (DBG) erlaubte wird. Sobald von der Begrenzungsvorrichtung anhand des Wertes null der Regelabweichung am Eingang des Reglers (7) der oben erwähnte Umschaltpunkt von steuerndem auf regelnden Systemeingriff erkannt wird, wird der Umschalter (9) in seine andere Position gesteuert, wonach das Ausgangssignal (SWBR) des Reglers (7) im weiteren als Ausgangssignal (SWB) der Begrenzungsfunktionsbaugruppe (1) dient. Die Minimalauswahlstufe (5) sorgt wieder dafür, daß bei Fahreranforderungen über der Grenzgeschwindigkeit (v_{G}) der regelnd begrenzende Systemeingriff zur Drosselklappeneinstellung wirksam ist, während die Fahreranforderung durchgelassen wird, sobald sie Geschwindigkeiten unterhalb der Grenzgeschwindigkeit (v_{G}) entspricht.

Als Variante des oben beschriebenen Verhaltens beim Einschalten der Begrenzungsfunktion während eines Istgeschwindigkeitswertes (vᵢₛₜ) deutlich unter der Grenzgeschwindigkeit (v_{G}) ist beim Einschalten der Begrenzungsfunktion während eines Istgeschwindigkeitswertes (vᵢₛₜ) dicht unterhalb der Grenzgeschwindigkeit (v_{G}), d.h. zwischen einem vorgebbaren Schwellenwert nahe unter der Grenzgeschwindigkeit (v_{G}) und letzterer, vorgesehen, als Getriebebeinflussung die aktuelle Fahrstufe beizubehalten, d.h. keine Getrieberückschaltung in den ersten Gang zu erlauben, und den von der Kennlinie (DBG) vorgegebenen maximalen Drosselklappenöffnungswinkel für geschwindigkeitssteuernde Eingriffe um einen vorgebbaren Faktor zu erhöhen sowie die Sollwertausgabe beim Aufregeln nicht wie im oben beschriebenen Fall über das Verzögerungsglied erster Ordnung vorzunehmen. Diese Maßnahme dient dazu, ein zu langsames Erreichen der Grenzgeschwindigkeit zu vermeiden, was ansonsten bei dieser Startbedingung des Begrenzungsverfahrens aufgrund der überschwingungsdämpfenden Maßnahmen auftreten könnte.

Die Kurvendiagramme von Figur 3 illustrieren einen typischen, mit der Begrenzungseinrichtung von Figur 1 geschwindigkeitsbegrenzten Anfahrvorgang. Die vier Diagramme zeigen parallel den zeitlichen Verlauf verschiedener Größen und zwar von oben nach unten denjenigen der Istgeschwindigkeit (vᵢₛₜ), des Geschwindigkeitssollwertes (v_{S}), des Ausgangssignals (SWB) der Begrenzungsfunktionsbaugruppe (1) und damit für diesen Fall gleichzeitig der Minimalauswahlstufe (5) sowie der Gangstellung (GA). Vorausgesetzt ist hierbei, daß vom Fahrer über das Fahrpedal eine Geschwindigkeit größer als 30km/h angefordert ist. Bis zu einem Zeitpunkt (t₀) liegt ein gesteuerter Begrenzungsbetrieb vor, bei dem der Drosselklappenöffnungswinkel auf den von der zugehörigen Kennlinie (DBG) vorgegebenen, maximalen Wert begrenzt wird, siehe das zweitunterste Diagramm. Während dieses steuernden Begrenzungsbetriebs erfolgt nach relativ kurzer Zeit eine Hochschaltung in den zweiten Gang sowie eine Hochschaltung in den dritten Gang zu einem vorgegebenen Istgeschwindigkeitswert, wie aus dem untersten Diagramm ersichtlich ist. Der Regelgeschwindigkeitssollwert (v_{S}) bleibt während dieser Zeit der nicht aktivierten Regelung auf demjenigen Geschwindigkeitswert (vᵣ) unterhalb der Grenzgeschwindigkeit (v_{G}), bei dem die Kennlinie (DBG) für die Drosselklappenöffnungswinkelbegrenzung auf den Wert null abgefallen ist.

Zum Zeitpunkt (t₀) hat die Istgeschwindigkeit (vᵢₛₜ) diesen Endwert (vᵣ) erreicht, und das Begrenzungsverfahren wartet für die vorgegebene Zeitdauer (t_{S}) unter Beibehaltung des Wertes null für den Drosselklappenöffnungswinkel ab, ob die Istgeschwindigkeit noch auf die Grenzgeschwindigkeit ansteigt. Ist dies der Fall, wird unverzüglich auf den geregelten Betrieb mit der PI-Regelung und der Grenzgeschwindigkeit (v_{G}) als Sollwert (v_{S}) umgeschaltet. Wenn dies wie im dargestellten Beispielsfall nicht eintritt, wird nach Ablauf der vorgegebenen Zeitspanne (t_{S}) auf den geschwindigkeitsregelnden Begrenzungsbetrieb mit zunächst inaktiv gehaltenem I-Regelanteil umgeschaltet, wobei der Sollwert (v_{S}) anfänglich auf den unter der Grenzgeschwindigkeit (v_{G}) liegenden Endwert (vᵣ) der Steuerungskennlinie (DBG) gesetzt ist. Von dort wird er im anschießenden Regelbetrieb, wie aus dem zweitobersten Diagramm ersichtlich, linear in einer Rampenfunktion hochgefahren, wobei der aktive P-Regleranteil eine entsprechende Erhöhung des vorgegebenen maximalen Drosselklappenöffnungswinkels vornimmt, wie aus dem zweituntersten Diagramm zu erkennen. Durch diese Maßnahme wird die Istgeschwindigkeit (vᵢₛₜ) an die Grenzgeschwindigkeit von 30km/h herangeführt. Sobald sie diese zu einem späteren Zeitpunkt (t₁) erreicht, wird das rampenförmige Hochfahren des Sollwertes (v_{S}) beendet und letzterer auf die Grenzgeschwindigkeit (v_{G}) gesetzt. Gleichzeitig wird auch der I-Anteil des Geschwindigkeitsreglers (7) aktiviert, so daß ab diesem Zeitpunkt die Geschwindigkeit durch eine PI-Regelung auf 30km/h gehalten wird.

Dieser geregelte Begrenzungsbetrieb gewährleistet eine Konstantfahrt mit 30km/h, solange der Fahrer nicht eine kleinere Geschwindigkeitsanforderung vorgibt. Zur Einhaltung dieser Konstantfahrt werden vergleichbare Kriterien wie für die herkömmliche Tempomatregelung herangezogen. Anstelle des vom Tempomaten her bekannten PD-T₁-Reglers wird jedoch der PI-Regler (7), ggf. mit Verzögerungsverhalten erster Ordnung und gangabhängigen Regelparametern, verwendet. Für die Regelung wird der Drosselklappenstellungsbereich bis zur Vollastkennlinie ausgenutzt. Zur Anpassung an das Fahrzeugverhalten wird das von der Begrenzungsregelung errechnete Motormoment über die von der Pedalkennlinieneinheit (10) umgesetzte Progressionskennlinie geführt, welche den Istwert des Drosselklappenöffnungswinkels als Funktion des vorgegebenen maximalen Öffnungswinkels festlegt und wie sie auch von der Tempomatregelung geläufig ist. Der Kennlinienverlauf wird hierbei geeignet gewählt.

Sollte die Istgeschwindigkeit trotz Getriebebeeinflussung und Motormomenteneingriff über die Grenzgeschwindigkeit hinaus ansteigen, werden als weitere abgestufte Maßnahmen Getrieberückschaltungen und/oder Bremseneingriffe vom System vorgenommen. Dabei lassen sich pendelnde Getriebeschaltungen durch Beobachtung des Motormomentes und Vergleich mit demjenigen, das für die Grenzgeschwindigkeit bei ebenem Straßenverlauf notwendig ist, verhindern. Um ein zu starkes Absinken der Istgeschwindigkeit an einer beginnenden Steigung bei zuvor aufgrund einer Gefällstrecke weiter über der Grenzgeschwindigkeit liegender Istgeschwindigkeit abzufangen, wird in einem solchen Fall der Sollwert etwas über die Grenzgeschwindigkeit gelegt und dann rampenförmig wieder auf diese zurückgeführt. Als weitere Maßnahme sorgt eine Antischubruckelfunktion dafür, daß kein Pendeln der Schubabschaltung an Gefällstrecken auftritt. Die Funktion besteht darin, die zuvor bei einer über der Grenzgeschwindigkeit liegend festgesetzten Freigabegeschwindigkeit freigegebene Schubabschaltung erst bei einer unter der Freigabegeschwindigkeit liegenden Fahrzeuggeschwindigkeit wieder zurückzunehmen.

Sobald während einer Begrenzungsregelungsphase die Fahrervorgabe für die Drosselklappenstellung wieder unter die Regelungsvorgabe fällt, hat erstere aufgrund der Minimalwertauswahl Vorrang, so daß die Regelungsphase beendet und der PI-Regler zurückgesetzt wird. Im Gegensatz zur Tempomatfunktion wird die Begrenzungsfunktion jedoch durch eine Bremsenbetätigung nicht abgeschaltet.

Befindet sich die Istgeschwindigkeit (vᵢₛₜ) beim Einschalten der Begrenzungsfunktion zwar unterhalb der Tempomatmindestschwelle, jedoch über der Grenzgeschwindigkeit (v_{G}), also z.B. zwischen 30km/h und 36km/h, so erfolgt ein steuernder, geschwindigkeitsreduzierender Eingriff wie folgt. Die Begrenzungssteuerungseinheit (6) gibt als Ausgangssignal dasjenige für maximalen Drosselklappenöffnungswinkel null ab, welches vom Umschalter (9) zur Minimalauswahlstufe (5) durchgelassen und von dieser zur Drosselklappeneinstellung ausgewählt wird. Zur weiteren Fahrzeugverzögerung wird das Motorbremsmoment durch eine Getrieberückschaltung in den dritten Gang herangezogen. Wird weiter erkannt, daß die Verzögerung einen wählbaren Wert überschreitet, erfolgt zusätzlich eine Rückschaltung in den zweiten Gang, sofern dieser nicht bereits zuvor vorliegt.

Die zusätzliche Tempomatfunktion der Vorrichtung, die durch den Tempomaten (2) realisiert wird, ist herkömmlicher Natur und braucht hier nicht näher beschrieben zu werden. Insbesondere besitzt der Tempomat (2) einen Bedienhebel, der fahrzeugbeschleunigend oder fahrzeugverzögernd bedienbar ist, wobei nach dessen Loslassen die dann erreichte Istgeschwindigkeit als Sollgeschwindigkeit der Tempomatregelung dient. Es kann sich nun die Anforderung ergeben, die Begrenzungsfunktion einzuschalten, wenn die Istgeschwindigkeit über der minimalen Tempomatgeschwindigkeitsschwelle liegt und daher die Begrenzungsfunktion nicht unmittelbar greift, z.B. wenn eine Tempo-30-Zone in einer Ortschaft beginnt, in der ansonsten die übliche 50km/h-Begrenzung gilt. Um die 30km/h-Begrenzung zu aktivieren, ist es in diesem Fall alternativ zum Bremsen durch den Fahrer möglich, den Tempomatbedienhebel fahrzeugverzögernd zu betätigen, um dadurch Getrieberückschaltungen auszulösen. Beim anschließenden Loslassen des Bedienhebels wird entweder die Tempomatfunktion aktiviert, wenn die Istgeschwindigkeit noch oberhalb der Tempomatmindestschwelle liegt, oder es wird die Begrenzungsfunktion aktiviert, wenn die Istgeschwindigkeit unter diese Schwelle abgesunken ist.

Da während aktiver Begrenzungsfunktion der Fahrer meistens eine höhere Motormomentanforderung gibt als zugelassen wird, sind Übergangsfunktionen vorgesehen, die nach einem Ausschalten der Begrenzungsfunktion wirksam werden, um die Fahrzeuggeschwindigkeit ohne Beschleunigungsruck von der Grenzgeschwindigkeit auf die fahrerangeforderte Geschwindigkeit zu steigern. Je nachdem, aufgrund welcher Tatsache die Begrenzungsfunktion ausgeschaltet wurde, sind hierfür unterschiedliche Maßnahmen vorgesehen.

Wenn der Fahrer die 30km/h-Begrenzungsfunktion über den dafür vorgesehenen Bedienschalter, z.B. am Tempomat, ausschaltet, erfolgt eine stetige, nicht komfortmindernde Beschleunigung des Fahrzeuges, bis der durch das Fahrpedal gegebene Fahrergeschwindigkeitswunsch erreicht ist. Dazu wird bei erkanntem Ausschalten durch die Begrenzungsvorrichtung das Motormoment über eine Rampenfunktion erhöht, deren Steilheit durch eine Kennlinie in Abhängigkeit von der Fahrpedalposition vorgegeben wird. Dabei wird die Steilheit mit steigender Fahrpedalauslenkung erhöht, so daß die während der Übergangsfunktion aktive Fahrzeugbeschleunigung um so größer ist, je weiter das Fahrpedal gedrückt ist. Somit läßt sich unabhängig von der Differenz zwischen Fahrerwunschgeschwindigkeit und der zuvor im Bereich der Grenzgeschwindigkeit befindlichen Istgeschwindigkeit die fahrerangeforderte Geschwindigkeit immer etwa innerhalb derselben Zeitdauer erreichen. Wird während der rampenförmigen Geschwindigkeitserhöhung die Fahrpedalstellung verändert, sorgt das System sofort für eine Anpassung der Rampensteilheit an die neue Fahrpedalposition. Sollte hierdurch die Vollastkennlinie um ein vorgebbares Maß überschritten werden, wird der maximale Drosselklappenöffnungswinkel auf 100% gesetzt, so daß die tatsächliche Drosselklappenstellung nur noch durch die Fahrpedalposition oder die Vollastkennlinie bestimmt wird. Dies markiert dann wiederum das Ende der Übergangsphase, und die Begrenzungsfunktion geht in den inaktiven Zustand. Selbstverständlich wird die Übergangsfunktion auch immer dann sofort beendet, wenn der Fahrer während dieser Phase die Fahrpedalstellung so weit zurücknimmt, daß das angeforderte Motormoment kleiner als das von der Rampenfunktion bereitgestellte Moment wird. Falls der Fahrer während der Übergangsphase einen vorhandenen Kick-down-Schalter für eine vorgegebene Zeitspanne betätigt, wird das vom System bereitgestellte Signal zur Drosselklappeneinstellung mit einem steileren Rampenverlauf auf die Fahrervorgabe erhöht, wodurch dem Fahrer die volle Fahrzeugbeschleunigung zur Verfügung steht und die Begrenzungsfunktion beendet wird.

Erkennt das System, daß der Fahrer die Begrenzungsfunktion über den Kick-down-Schalter ausschaltet, wird dies als Versuch gewertet, möglichst schnell zu beschleunigen. Dementsprechend wird in der anschließenden Übergangsfunktion von der Begrenzungseinrichtung das Signal für den maximalen Drosselklappenöffnungswinkel nach Ablauf einer vorgebbaren Toleranzzeit entsprechend einer abgelegten Kennlinie relativ rasch erhöht. Insbesondere kann die Kennlinie zu Beginn einen Motormomentensprung beinhalten. Zusätzlich wird das Getriebe dahingehend beeinflußt, daß keine Rückschaltung in den ersten Gang zugelassen wird. Die Beendigung der Übergangsfunktion erfolgt für diesen Fall analog zum oben beschriebenen Fall der schalterbewirkten Ausschaltung der Begrenzungsfunktion.

Weitere Anpassungs- und Anzeigemaßnahmen können angepaßt an das jeweilige Fahrzeug vorgenommen werden. Bei einem Fahrzeug mit Antriebsschlupfregelung (ASR) arbeitet beispielsweise während einer Beschleunigungsrampe der Begrenzungsfunktion die Momentenbegrenzung erhöhend und damit gegen die ASR. Demzufolge wird dem Reduzierungswunsch der ASR höhere Priorität eingeräumt. Damit nach einem solchen etwaigen ASR-Eingriff kein Motormomentensprung durch zwischenzeitliches Erhöhen des Beschleunigungsrampenwertes auftritt, ist vorgesehen, während des ASR-Eingriffs den von der Begrenzungsfunktion vorgegebenen Motormomentensollwert auf der Rampe anzuhalten und nach dem ASR-Eingriff vom angehaltenen Wert aus fortzuführen.

Es versteht sich, daß sich das oben beschriebene Geschwindigkeitsbegrenzungssystem und das von diesem realisierte Begrenzungsverfahren nicht nur zur Einhaltung einer Höchstgeschwindigkeit von 30km/h, sondern auch für jeden anderen Höchstgeschwindigkeitswert eignet. Gegebenenfalls kann eine stufenlose Einstellung der Grenzgeschwindigkeit vorgesehen sein. Außerdem ist es grundsätzlich auch möglich, das Begrenzungsverfahren zur Einhaltung einer Mindestgeschwindigkeit anzuwenden, wozu die oben beschriebenen Maßnahmen auf diesen bezüglich der Geschwindigkeitsrichtung umgekehrten Fall geeignet anzupassen sind.

## Patentansprüche

1. Verfahren zur Begrenzung der Geschwindigkeit eines Kraftfahrzeuges auf eine vorgegebene Grenzgeschwindigkeit (v_{G}), die einen Bereich einzuhaltender Geschwindigkeiten von einem Bereich zu vermeidender Geschwindigkeiten trennt, mit folgenden Merkmalen:
a) wenn die fahrerangeforderte Geschwindigkeit im Bereich einzuhaltender Geschwindigkeiten liegt, bildet diese die Fahrgeschwindigkeit; und
b) wenn die fahrerangeforderte Geschwindigkeit im Bereich zu vermeidender Geschwindigkeiten liegt, erfolgt
b.1) ein geschwindigkeitssteuernder Systemeingriff nach einer vorgegebenen Steuerungskennlinie (DBG) als Funktion der Istgeschwindigkeit (vᵢₛₜ), wenn sich die Istgeschwindigkeit innerhalb eines vorgegebenen Intervalls des Bereiches erlaubter Geschwindigkeiten befindet, und
b.2) ein geschwindigkeitsregelnder Systemeingriff, wenn sich die Istgeschwindigkeit (vᵢₛₜ) innerhalb eines vorgegebenen, die Grenzgeschwindigkeit enthaltenden Geschwindigkeitsintervalls befindet.

2. Verfahren nach Anspruch 1, weiter
**dadurch gekennzeichnet, daß**
ein geschwindigkeitssteuernder Systemeingriff spätestens dann beendet und auf einen geschwindigkeitsregelnden Systemeingriff umgeschaltet wird, wenn die Istgeschwindigkeit (vᵢₛₜ) die Grenzgeschwindigkeit (v_{G}) erreicht, wobei die Sollgeschwindigkeit (v_{S}) des anschließenden Regeleingriffs bereits anfänglich auf die Grenzgeschwindigkeit gesetzt oder rampenförmig zu dieser hin geändert wird.

3. Verfahren nach Anspruch 2, weiter
**dadurch gekennzeichnet, daß**
- bei Überschreiten eines vorgegebenen, einen vorbestimmten Abstand zur Grenzgeschwindigkeit (v_{G}) einhaltenden Geschwindigkeitswertes (vᵣ) durch die Istgeschwindigkeit (vᵢₛₜ) in Richtung Grenzgeschwindigkeit während eines geschwindigkeitssteuernden Systemeingriffs die Istgeschwindigkeit über eine vorgegebene Zeitspanne (tₛ) beobachtet wird und
- auf einen geschwindigkeitsregelnden Eingriff mit auf die Grenzgeschwindigkeit gesetzter Sollgeschwindigkeit (v_{S}) umgeschaltet wird, sobald die Istgeschwindigkeit innerhalb der vorgegebenen Zeitspanne die Grenzgeschwindigkeit erreicht, oder
- nach Ablauf der vorgegebenen Zeitspanne eine Umschaltung auf einen geschwindigkeitsregelnden Eingriff mit sich von der beabstandet vorgegebenen Geschwindigkeit (vᵣ) in Richtung Grenzgeschwindigkeit rampenförmig verändernder Sollgeschwindigkeit (v_{S}) umgeschaltet wird, wenn die Istgeschwindigkeit innerhalb der vorgegebenen Zeitspanne (tₛ) nicht die Grenzgeschwindigkeit erreicht.

4. Verfahren nach einem der Ansprüche 1 bis 3, weiter
**dadurch gekennzeichnet, daß**
die geschwindigkeitssteuernden und/oder die geschwindigkeitsregelnden Systemeingriffe von der Istgeschwindigkeit abhängige Motormoment-, und/oder Getriebeschaltungs- und/oder Bremseneingriffe beinhalten.

5. Verfahren nach Anspruch 4, weiter
**dadurch gekennzeichnet, daß**
die Grenzgeschwindigkeit (v_{G}) der obere Endwert des Bereichs einzuhaltender Geschwindigkeiten ist und die geschwindigkeitssteuernden Systemeingriffe eine von der Istgeschwindigkeit abhängige Begrenzung des maximalen Öffnungswinkels einer Drosselklappe und die geschwindigkeitsregelnden Systemeingriffe die Einstellung des Drosselklappenöffnungswinkels in Abhängigkeit von der Istgeschwindigkeit beinhalten.

6. Verfahren nach Anspruch 5, weiter
**dadurch gekennzeichnet, daß**
das Geschwindigkeitsintervall für geschwindigkeitssteuernde Systemeingriffe sich nach unten bis zum Wert null erstreckt und der geschwindigkeitssteuernde Systemeingriff einen Eingriff in eine Automatgetriebeschaltung beinhaltet, welcher ein Anfahren im zweiten Gang vorsieht, falls die Auslenkung eines Fahrpedals nicht über einem vorgegebenen Wert liegt.

7. Verfahren nach Anspruch 5 oder 6, weiter
**dadurch gekennzeichnet, daß**
für die geschwindigkeitssteuernden Systemeingriffe, bei deren Aktivierung die Istgeschwindigkeit oberhalb eines vorgegebenen, im Bereich einzuhaltender Geschwindigkeiten liegenden Schwellenwertes liegt, ein maximaler Drosselklappenöffnungswinkel in Abhängigkeit von der Istgeschwindigkeit vorgegeben wird, der um einen wählbaren Faktor gegenüber demjenigen erhöht ist, der für diejenigen geschwindigkeitssteuernden Systemeingriffe verwendet wird, bei deren Aktivierung die Istgeschwindigkeit unterhalb des Schwellenwertes liegt.

8. Verfahren nach einem der Ansprüche 5 bis 7, weiter
**dadurch gekennzeichnet, daß**
es handbedient ein- und ausschaltbar ist, wobei
- auf einen Einschaltvorgang hin bei über dem die Grenzgeschwindigkeit enthaltenden Intervall für die Aktivierung regelnder Systemeingriffe liegender Istgeschwindigkeit zunächst ein geschwindigkeitsreduzierender, steuernder Systemeingriff erfolgt und
- auf einen Ausschaltvorgang hin bei über der Grenzgeschwindigkeit liegender fahrerangeforderter Geschwindigkeit eine Übergangsfunktion gestartet wird, während der der maximale Drosselklappenöffnungswinkel von dem durch den vorangegangenen geschwindigkeitssteuernden oder geschwindigkeitsregelnden Systemeingriff bestimmten Wert stetig auf den fahrerangeforderten Wert geführt wird.

9. Vorrichtung zur Begrenzung der Geschwindigkeit eines Kraftfahrzeuges auf eine vorgegebene Grenzgeschwindigkeit, mit folgenden Elementen zur Durchführung des Verfahrens nach einem der Ansprüche 5 bis 8:
- einer die Stellung eines Fahrpedals erfassenden Einheit (3),
- einer Begrenzungsfunktionsbaugruppe (1), die einen Geschwindigkeitssensor (8), einen mit diesem verbundenen Geschwindigkeitsregler (7), eine Begrenzungssteuerungseinheit (6) sowie einen Umschalter (9) zur wahlweisen Bereitstellung des Ausgangssignals der Steuerungseinheit oder des Reglers als Begrenzungsausgangssignal (SWB) beinhaltet und der das Ausgangssignal (SWP) der pedalstellungserfassenden Einheit (3) zuführbar ist, und
- einer Minimalauswahlstufe (5), welcher das Ausgangssignal (SWP) der pedalstellungserfassenden Einheit (3) und das Ausgangssignal (SWB) der Begrenzungsfunktionsbaugruppe (1) zuführbar ist und deren Ausgangssignal (SWD) den maximalen Drosselklappenöffnungswinkel bestimmt.

10. Vorrichtung nach Anspruch 9, weiter
**gekennzeichnet durch**
- eine Tempomat-Geschwindigkeitsregeleinheit (2) und
- eine Maximalauswahlstufe (4), welcher das Tempomatausgangssignal (SWT) und das Ausgangssignal (SWP) der pedalstellungserfassenden Einheit (3) zugeführt ist und deren Ausgangssignal (SWTPM) neben dem Ausgangssignal (SWB) der Begrenzungsfunktionsbaugruppe (1) der Minimalauswahlstufe (5) zugeführt ist.

## Claims

1. Method for limiting the speed of a motor vehicle to a specified limiting speed (v_{G}) which separates a range of speeds to be maintained from a range of speeds which are to be avoided, with the following features:
a) if the speed demanded by the driver is located in the range of speeds to be maintained, this forms the travelling speed; and
b) if the speed demanded by the driver is located in the range of speeds to be avoided,
b.1) an open-loop speed-controlling system intervention takes place in accordance with a specified open-loop control characteristic (DBG) as a function of the actual speed (vᵢₛₜ) if the actual speed is located within a specified interval of the range of permitted speeds, and
b.2) a closed-loop speed-controlling system intervention takes place if the actual speed (vᵢₛₜ) is located within a specified speed interval containing the limiting speed.

2. Method according to Claim 1, further characterized in that, at the latest, an open-loop speed-controlling system intervention ends and the system switches over to a closed-loop speed-controlling system intervention whenever the actual speed (vᵢₛₜ) attains the limiting speed (v_{G}), the required speed (v_{S}) for the subsequent closed-loop control intervention being already set, at the outset, to the limiting speed or being changed towards it in the shape of a ramp.

3. Method according to Claim 2, further characterized in that
- when the actual speed (vᵢₛₜ) exceeds a specified speed value (vᵣ), maintaining a predetermined distance from the limiting speed (v_{G}), in the direction towards the limiting speed during an open-loop speed-controlling system intervention, the actual speed is observed over a specified time interval (t_{S}) and
- the system switches over to a closed-loop speed-controlling intervention with a required speed (v_{S}) set to the limiting speed as soon as the actual speed attains the limiting speed within the specified time interval, or
- after the specified time interval has elapsed, the system switches over to a closed-loop speed-controlling intervention with a required speed (v_{S}) which changes in ramp-shape from the specified speed (vᵣ), which is at a distance from the limiting speed, in the direction towards the limiting speed if the actual speed does not attain the limiting speed within the specified time interval (t_{S}).

4. Method according to one of Claims 1 to 3, further characterized in that the open-loop speed-controlling and/or the closed-loop speed-controlling system interventions contain engine torque interventions and/or gear-changing interventions and/or brake interventions as a function of the actual speed.

5. Method according to Claim 4, further characterized in that the limiting speed (v_{G}) is the upper end value of the range of speeds to be maintained and the open-loop speed-controlling system interventions include a limitation, which depends on the actual speed, of the maximum opening angle of a throttle butterfly and the closed-loop speed-controlling system interventions include the setting of the throttle butterfly opening angle as a function of the actual speed.

6. Method according to Claim 5, further characterized in that the speed interval for open-loop speed-controlling system interventions extends downwards to the value zero and the open-loop speed-controlling system intervention includes an intervention in an automatic gearbox gear selection which provides for pulling away in second gear if the deflection of an accelerator pedal is not located beyond a specified value.

7. Method according to Claim 5 or 6, further characterized in that in the case of the open-loop speed-controlling system interventions for whose activation the actual speed is located above a specified threshold value located in the range of speeds to be maintained, a maximum throttle butterfly opening angle is specified as a function of the actual speed, which throttle butterfly opening angle is increased by a factor, which can be selected, relative to the one which is used for those open-loop speed-controlling system interventions for whose activation the actual speed is located below the threshold value.

8. Method according to one of Claims 5 to 7, further characterized in that it can be switched on and off under manual operation, with
- a speed-reducing, open-loop controlling system intervention initially taking place in the event of a switch-on procedure in the case of an actual speed located beyond the interval, containing the limiting speed, for the activation of closed-loop controlling system interventions and
- a transition function being started in the case of a switch-off procedure in the event of a driver-demanded speed located beyond the limiting speed and, during this function, the maximum throttle butterfly opening angle is brought continuously from the value determined by the previous open-loop speed-controlling or closed-loop speed-controlling system intervention to the value demanded by the driver.

9. Appliance for limiting the speed of a motor vehicle to a specified limiting speed, with the following elements for carrying out the method in accordance with one of Claims 5 to 8:
- a unit (3) recording the position of an accelerator pedal,
- a speed-limiting function subassembly (1) which includes a speed sensor (8), a closed-loop speed control unit (7) connected to the speed sensor (8), an open-loop speed-limitation control unit (6) and a change-over switch (9) for the optional provision of the output signal of the open-loop control unit or of the closed-loop control unit as the speed-limiting output signal (SWB) and to which speed-limiting function subassembly (1) can be supplied the output signal (SWP) of the unit (3) for recording the pedal position, and
- a select-minimum stage (5) to which can be supplied the output signal (SWP) of the unit (3) for recording the pedal position and the output signal (SWB) of the speed-limiting function subassembly (1) and whose output signal (SWD) determines the maximum throttle butterfly opening angle.

10. Appliance according to Claim 9, further characterized by
- a closed-loop cruise control system speed control unit (2) and
- a select-maximum stage (4) to which is supplied the cruise control system output signal (SWT) and the output signal (SWP) of the unit (3) for recording the pedal position and whose output signal (SWTPM) is supplied to the select-minimum stage (5) in addition to the output signal (SWB) of the speed-limiting function subassembly (1).

## Revendications

1. Procédé pour limiter la vitesse d'un véhicule automobile à une vitesse prescrite (v_{G}), qui sépare une plage de vitesses à respecter d'avec une plage de vitesses à éviter, présentant les caractéristiques suivantes:
a) lorsque la vitesse de circulation demandée se situe sur la plage des vitesse à respecter, cette vitesse forme la vitesse de circulation; et
b) lorsque la vitesse de circulation demandée se situe sur la plage de vitesses à éviter, il se produit
b.1) une intervention d'autorité sur la vitesse de la part du système selon une caractéristique de décision d'autorité prescrite (DBG) en fonction de la vitesse réelle (v_{réel}), lorsque la vitesse réelle se trouve à l'intérieur d'un intervalle prescrit de la plage des vitesses autorisées, et
b.2) une intervention de régulation de la vitesse de la part du système lorsque la vitesse réelle (v_{réel}) se trouve à l'intérieur d'une plage de vitesse prescrite, contenant la vitesse limite.

2. Procédé selon la revendication 1,
caractérisé en outre par le fait qu'une intervention d'autorité sur la vitesse de la part du système se termine au plus tard, et il y a alors commutation sur une intervention de régulation de la vitesse de la part du système, lorsque la vitesse réelle (v_{réel}) atteint la vitesse limite (v_{G}), la vitesse prescrite (v_{S}) de l'intervention de régulation qui vient à la suite pouvant déjà prendre, dès le début, la valeur de la vitesse limite ou se modifier pour y arriver suivant une rampe.

3. Procédé selon la revendication 2,
caractérisé en outre par le fait que
- lors d'un dépassement, par valeur supérieure, d'une valeur prescrite de la vitesse (vᵣ) respectant une différence prédéterminée par rapport à la vitesse limite (v_{G}), par la vitesse réelle (v_{réel}) en direction de la vitesse limite pendant une intervention d'autorité sur la vitesse de la part du système, la vitesse réelle est observée pendant un intervalle de temps prescrit (tₛ) et
- il y a commutation sur une intervention de régulation de la vitesse, avec une vitesse prescrite (vₛ) qui prend la valeur de la vitesse limite, dès que la vitesse réelle atteint la vitesse limite au cours de l'intervalle de temps prescrit, ou
- après écoulement de l'intervalle de temps prescrit, il y a commutation sur une intervention de régulation de la vitesse avec une vitesse prescrite qui se modifie suivant une rampe, depuis la vitesse prescrite (v_{f}), qui présente une différence par rapport à la vitesse limite, pour aller vers la vitesse limite, si la vitesse réelle n'atteint pas la vitesse limite dans l'intervalle de temps prescrit (tₛ).

4. Procédé selon l'une des revendications 1 à 3,
caractérisé en outre par le fait que les interventions d'autorité sur la vitesse et/ou de régulation de la vitesse, de la part du système, impliquent des interventions sur le couple du moteur et/ou sur la boîte de vitesses et/ou sur les freins.

5. Procédé selon la revendication 4,
caractérisé en outre par le fait que la vitesse limite (v_{G}) est la valeur extrême supérieure de la plage des vitesses à respecter et que les interventions d'autorité sur la vitesse de la part du système impliquent une limitation, fonction de la vitesse réelle, de l'angle d'ouverture maximal du papillon des gaz et que les interventions de régulation de la vitesse de la part du système impliquent le réglage de l'angle d'ouverture du papillon des gaz en fonction de la vitesse réelle.

6. Procédé selon la revendication 5,
caractérisé en outre par le fait que l'intervalle de vitesse pour les interventions d'autorité sur la vitesse de la part du système s'étend vers le bas jusqu'à la valeur zéro et que l'intervention d'autorité sur la vitesse de la part du système implique une intervention de sélection de la vitesse d'une boîte de vitesses automatique, intervention qui prévoit un passage en seconde vitesse dans le cas où l'angle parcouru par une pédale d'accélérateur ne situe pas au-dessus d'une valeur prescrite.

7. Procédé selon la revendication 5 ou 6,
caractérisé en outre par le fait que, pour les interventions d'autorité sur la vitesse de la part du système, lors de l'activation desquelles la vitesse réelle se situe au-dessus d'une valeur de seuil prescrite, située sur la plage des vitesses à respecter, est prescrit, en fonction de la vitesse réelle, un angle maximal d'ouverture du papillon des gaz qui est augmenté, d'un facteur à choisir, par rapport à celui qui s'emploie pour les interventions d'autorité, de la part du système, lors de l'activation desquelles la vitesse réelle se situe en dessous de la valeur de seuil.

8. Procédé selon l'une des revendications 5 à 7,
caractérisé en outre par le fait que l'on peut l'activer et le désactiver manuellement, étant précisé que
- lors d'un processus d'activation, en présence d'une vitesse réelle située au-dessus de l'intervalle, contenant la vitesse limite, prévu pour l'activation des interventions de régulation de la part du système, il se fait tout d'abord une intervention d'autorité de la part du système réduisant la vitesse et
- lors d'un processus de désactivation, en présence d'une vitesse de circulation demandée située au-dessus de la vitesse limite, démarre une fonction de transition pendant laquelle la valeur déterminée par l'intervention d'autorité précédente sur la vitesse de la part du système ou par l'intervention précédente de régulation de la vitesse fait passer en permanence l'angle maximal d'ouverture du papillon des gaz sur la valeur correspondant à la vitesse de circulation demandée.

9. Dispositif pour limiter la vitesse d'un véhicule automobile à une vitesse limite prescrite, comportant les éléments suivants pour la mise en oeuvre du procédé selon l'une des revendications 5 à 8:
- un organe (3) de saisie de la position d'une pédale d'accélérateur,
- un sous-ensemble de fonction de limitation (1) qui contient un détecteur de vitesse (8), un régulateur de vitesse (7) lié à celui-ci, un organe (6) de commande de limitation, ainsi qu'un commutateur (9) pour permettre de disposer au choix, comme signal de sortie de limitation (SWB), du signal de sortie de l'organe de commande ou de celui du régulateur et sous-ensemble auquel peut être amené le signal de sortie (SWP) de l'organe (3) qui saisit la position de la pédale d'accélérateur, et
- un étage de sélection minimale (5) auquel peuvent être amenés le signal de sortie (SWP) de l'organe (3) de saisie de la position de la pédale d'accélérateur et le signal de sortie (SWD) du sous-ensemble (1) de fonction de la limitation et dont le signal de sortie (SWD) détermine l'angle maximal d'ouverture du papillon des gaz.

10. Dispositif selon la revendication 9,
caractérisé en outre par
- un organe de régulation de la vitesse Tempomat (2) et
- un étage de sélection maximale (4) auquel sont amenés le signal de sortie (SWT) de l'organe Tempomat et le signal de sortie (SWP) de l'organe (3) de saisie de la position de la pédale d'accélérateur et dont le signal de sortie (SWTPM) est amené à l'étage de sélection minimale (5) à côté du signal de sortie (SWB) du sous-ensemble de fonction de limitation (1).
